# EUROPÄISCHE PATENTANMELDUNG

(11) **EP 2 557 463 A1**
(43) Veröffentlichungstag der Anmeldung: **13.02.2013**
(21) Anmeldenummer: 11176936.0
(22) Anmeldetag: 09.08.2011
(51) Int. Cl.: G05B 19/042, G06F 11/36

(54) **Verfahren zur Verarbeitung von Daten in einem Beeinflussungsgerät**

(71) Anmelder: dSPACE digital signal processing and control engineering GmbH, 33102 Paderborn (DE)
(72) Erfinder: Dressler, Marc, 32805 Horn-Bad Meinberg (DE); Hufnagel, Thorsten, 33154 Salzkotten (DE); Hofmann, Daniel, 33102 Paderborn (DE); Kellers, Bastian, 33102 Paderborn (DE)

(57) **Zusammenfassung**

Gemäß dem Gegenstand der Erfindung wird ein Verfahren bereitgestellt zur Verarbeitung von Daten in einem Beeinflussungsgerät, wobei das Beeinflussungsgerät mit einem Kraftfahrzeug-Steuergerät und mit einem Datenverarbeitungsgerät verbunden ist. Das Kraftfahrzeug-Steuergerät und das Beeinflussungsgerät sind in einem Kraftfahrzeug oder beispielsweise in einem Prüfstand in einem Labor angeordnet. Auf dem Kraftfahrzeug-Steuergerät läuft ein erstes Programm. Zwischen dem Datenverarbeitungsgerät und dem Beeinflussungsgerät werden Daten gemäß einem XCP-Protokoll oder einem CCP-Protokoll ausgetauscht.

Das Beeinflussungsgerät weist erfindungsgemäß eine zweite Ausführungseinheit auf, beispielsweise eine FPGA-Einheit, wobei die zweite Ausführungseinheit vorgegebene Datenverarbeitungsschritte schneller ausführt als die erste Ausführungseinheit. Nach dem erfindungsgemäßen Verfahren werden die mittels des XCP-Protokolls oder des CCP-Protokolls ausgetauschten Daten auf ein vorgegebenes Kriterium untersucht und es wird anhand des Ergebnisses der Untersuchung die Verarbeitung der Daten entweder in der ersten Ausführungseinheit oder in der zweiten Ausführungseinheit durchgeführt.

## Beschreibung

Die Erfindung betrifft ein Verfahren zur Verarbeitung von Daten gemäß dem Oberbegriff des Patentanspruchs 1.

Aus der Druckschrift DE102004027033A1 ist ein Verfahren zur Verarbeitung von Daten eines Kraftfahrzeug-Steuergeräts 12 und eines Datenverarbeitungsgeräts 14 durch ein Beeinflussungsgerät 11 bekannt.

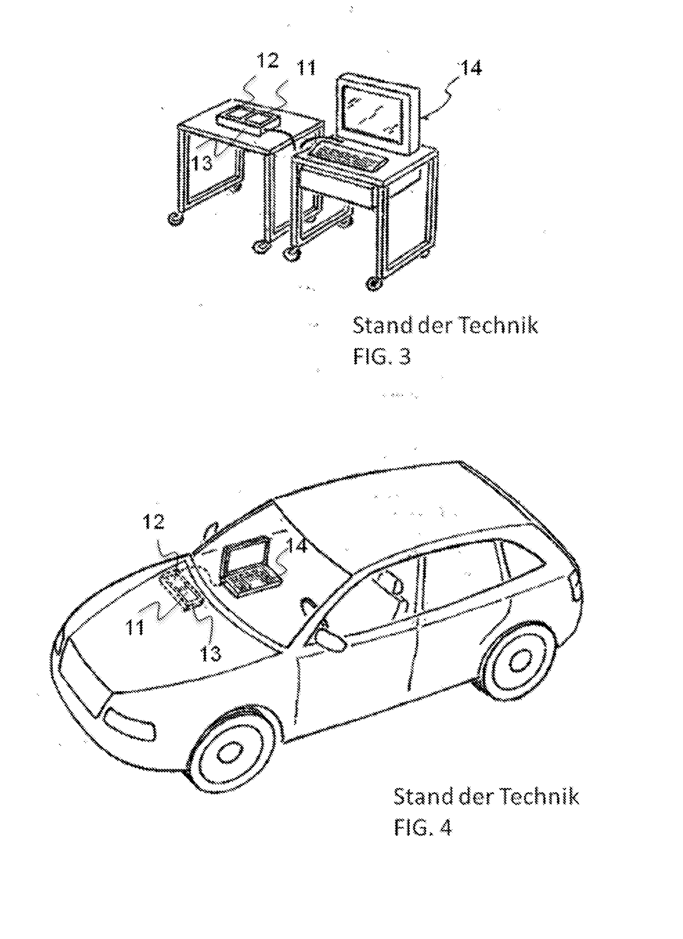

Wie in Figur 3 und Figur 4 dargestellt, ist ein Kraftfahrzeug-Steuergerät 12 mit einem Beeinflussungsgerät 11 verbunden, wobei das Kraftfahrzeug-Steuergerät 12 und das Beeinflussungsgerät 11 zusammen in einem Gehäuse 13 oder in zwei verschiedenen Gehäusen angeordnet sind. Dabei sind das Kraftfahrzeug-Steuergerät 12 und das Beeinflussungsgerät 11 entweder wie in Figur 4 dargestellt in einem Kraftfahrzeug angeordnet oder wie in Figur 3 dargestellt in einem Labor oder einem Prüfstand angeordnet. Auf dem Kraftfahrzeug-Steuergerät 12 läuft ein erstes Programm, beispielsweise zur Steuerung eines Motors.

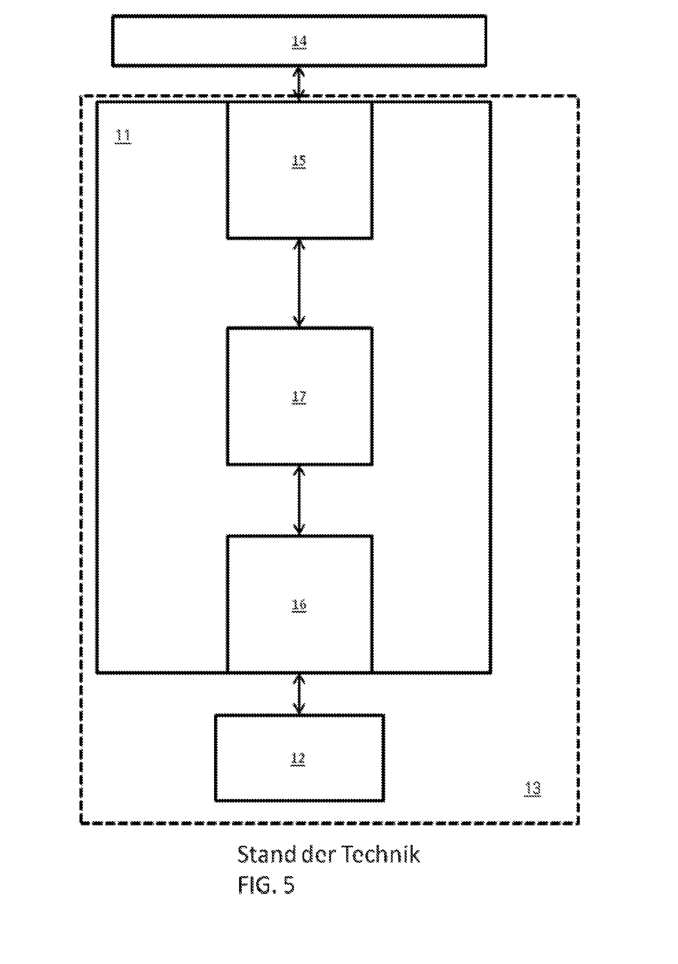

Wie in Figur 5 dargestellt ist das Beeinflussungsgerät 11 mit einem Datenverarbeitungsgerät 14 über eine Datenverarbeitungsgeräte-Schnittstelle 15 verbunden. Ein Datenverarbeitungsgerät 14 ist beispielsweise ein Personal Computer, ein Simulator oder ein Prozessorboard. Der Datenaustausch zwischen dem Beeinflussungsgerät 11 und dem Datenverarbeitungsgerät 14 erfolgt gemäß dem standardisierten XCP-Protokoll und / oder dem CCP-Protokoll.

Eine Aufgabe des Beeinflussungsgeräts 11 ist zum Beispiel, Werte aus dem Kraftfahrzeug-Steuergerät 12 auszulesen und an das Datenverarbeitungsgerät 14 weiterzuleiten, damit das Kraftfahrzeug-Steuergerät 12 vom Datenverarbeitungsgerät 14 auf seine Funktionen getestet werden kann. Eine andere Aufgabe des Beeinflussungsgeräts 11 ist zum Beispiel dem Kraftfahrzeug-Steuergerät 12 Werte von dem Datenverarbeitungsgerät 14 zur Verfügung zu stellen.

Zwischen dem Kraftfahrzeug-Steuergerät 12 und dem Beeinflussungsgerät 11 werden Daten übertragen. Aus der Druckschrift DE102006062555A1 ist ein Verfahren zur Übertragung von Daten eines Kraftfahrzeug-Steuergeräts 12 an ein Beeinflussungsgerät 11 bekannt, bei dem das Beeinflussungsgerät 11 eine Ausführungseinheit 17, einen Speicher und eine Schnittstelle 16, vorzugsweise zu einer Debug-Schnittstelle des Kraftfahrzeug-Steuergeräts 12 enthält. Mit der Debug-Schnittstelle des Kraftfahrzeug-Steuergeräts 12, die eine sogenannte Trace-Funktionalität aufweist, ist es möglich zu beobachtende Adressen im Speicher eines Kraftfahrzeug-Steuergeräts 12 zu überwachen und die Daten an das Beeinflussungsgerät 11 zu übertragen.

Wie Figur 5 zeigt, dient das Beeinflussungsgerät 11 als Kommunikationsmittel zwischen dem Kraftfahrzeug-Steuergerät 12 und dem Datenverarbeitungsgerät 14. Im Stand der Technik werden von dem Beeinflussungsgerät 11 alle Daten und Befehle mittels einer ersten Ausführungseinheit 17 des Beeinflussungsgeräts 11 bearbeitet. Eine Ausführungseinheit 17 ist beispielsweise ein FPGA, ein separater Prozessor oder ein Core eines Multicore-Prozessors.

Vor diesem Hintergrund besteht die Aufgabe der Erfindung darin, ein Verfahren anzugeben, das den Stand der Technik weiterbildet.

Die Aufgabe wird durch ein Verfahren zur Verarbeitung von Daten mit den Merkmalen des Patentanspruchs 1 gelöst. Vorteilhafte Ausgestaltungen der Erfindung sind Gegenstand von Unteransprüchen.

Gemäß dem Gegenstand der Erfindung wird ein Verfahren bereitgestellt zur Verarbeitung von Daten in einem Beeinflussungsgerät 11, wobei das Beeinflussungsgerät 11 mit einem Kraftfahrzeug-Steuergerät 12 und mit einem Datenverarbeitungsgerät 14 verbunden ist. Das Kraftfahrzeug-Steuergerät 12 und das Beeinflussungsgerät 11 sind in einem Kraftfahrzeug oder beispielsweise in einem Prüfstand bzw. in einem Labor angeordnet. Auf dem Kraftfahrzeug-Steuergerät 12 läuft ein erstes Programm. Zwischen dem Datenverarbeitungsgerät 14 und dem Beeinflussungsgerät 11 werden Daten gemäß einem XCP-Protokoll oder einem CCP-Protokoll ausgetauscht.

Das Beeinflussungsgerät 11 weist erfindungsgemäß eine zweite Ausführungseinheit auf, wobei die zweite Ausführungseinheit vorgegebene Datenverarbeitungsschritte schneller ausführt als die erste Ausführungseinheit 17. Nach dem erfindungsgemäßen Verfahren werden die mittels des XCP-Protokolls oder des CCP-Protokolls ausgetauschten Daten auf ein vorgegebenes Kriterium untersucht und es wird anhand des Ergebnisses der Untersuchung die Verarbeitung der Daten entweder in der ersten Ausführungseinheit 17 oder in der zweiten Ausführungseinheit durchgeführt.

Ein Vorteil der Erfindung ist, dass die Daten je nach Verarbeitungsbedarf auf der ersten Ausführungseinheit 17 oder der zweiten Ausführungseinheit verarbeitet werden und somit Daten, die aufgrund von Echtzeitbedingungen innerhalb einer gegebenen Zeitspanne verarbeitet werden müssen, in der zweiten Ausführungseinheit mittels schnellerer Datenverarbeitungsschritte verarbeitet werden, wodurch im Gegensatz zum Stand der Technik die Datenverarbeitung innerhalb der gegebenen Zeitspanne besser gewährleistet wird. Weiterhin ist es nun beispielsweise möglich, dass Daten, die nicht in Echtzeit berechnet werden müssen, wie zum Beispiel Konfigurationsbefehle, auf der ersten Ausführungseinheit 17 bearbeitet werden, während parallel und somit Daten in Echtzeit auf der zweiten Ausführungseinheit bearbeitet werden. Dadurch werden ein hoher Datendurchsatz und kurze Latenzen erreicht, beispielsweise für Kalibrierungsanwendungen, Messanwendungen, Stimulusanwendungen und Bypassanwendungen.

In einer bevorzugten Ausführungsform der Erfindung weisen die Daten eine erste Priorität oder eine zweite Priorität auf und als Kriterium wird die Priorität der Daten überprüft. Die Daten mit einer ersten Priorität sollen beispielsweise innerhalb einer vorgegebenen Zeitspanne bearbeitet werden und werden deshalb auf der zweiten Ausführungseinheit verarbeitet, während die Daten mit einer zweiten Priorität beispielsweise nicht innerhalb einer gegebenen Zeitspanne verarbeitet werden müssen und deshalb auf der ersten Ausführungseinheit 17 verarbeitet werden.

In einer weiteren Ausführungsform werden die von dem Kraftfahrzeug-Steuergerät 12 auf das Beeinflussungsgerät 11 übertragenen Daten auf das vorgegebene Kriterium untersucht und anhand des Ergebnisses der Untersuchung die Datenverarbeitung entweder in der ersten Ausführungseinheit 17 oder in der zweiten Ausführungseinheit durchgeführt.

In einer weiteren Ausführungsformweist das Beeinflussungsgerät 11 eine der ersten Ausführungseinheit 17 und der zweiten Ausführungseinheit vorgelagerte Komponente auf. Mittels der vorgelagerten Komponente wird eine Aufteilung der Daten auf die erste Ausführungseinheit 17 und auf die zweite Ausführungseinheit durchgeführt.

In einer weiteren Ausführungsform wird die Datenverarbeitung in der zweiten Ausführungseinheit mittels einer FPGA-Einheit.

In einer weiteren Ausführungsform der Erfindung ist die erste Ausführungseinheit 17 eine Prozessoreinheit, welche ein sequenzielles Programm ausführt.

In einer weiteren Ausführungsform umfasst das Beeinflussungsgerät 11 eine dritte Ausführungseinheit. Weiterhin sind mindestens drei Arten von Daten vorgesehen, wobei eine erste Art von Daten in der ersten Ausführungseinheit 17, eine zweite Art von Daten in der zweiten Ausführungseinheit und eine dritte Art von Daten in der dritten Ausführungseinheit verarbeitet wird.

In einer weiteren erfindungsgemäßen Ausführungsform wird mittels der ersten Ausführungseinheit 17 die zweite Ausführungseinheit und / oder die dritte Ausführungseinheit programmiert oder konfiguriert. Dies hat beispielsweise den Vorteil, dass die Flexibilität eines Prozessors mit dem hohen Datendurchsatz eines FPGAs vereint wird.

Die Erfindung wird nachfolgend unter Bezugnahme auf die Zeichnungen näher erläutert. Hierbei werden gleichartige Teile mit identischen Bezeichnungen beschriftet. Die dargestellte Ausführungsformen sind stark schematisiert, d.h. die Abstände und laterale und vertikale Erstreckung sind nicht maßstäblich und weisen, sofern nicht anders angegeben auch keine ableitbare geometrische Relation zueinander auf. Darin zeigen die:
Figur 1 eine erfindungsgemäße Ausführungsform eines Verfahrens zur Verarbeitung von Daten in einem Beeinflussungsgerät,
Figur 2 eine weitere erfindungsgemäße Ausführungsform eines Verfahrens zur Verarbeitung von Daten in einem Beeinflussungsgerät,
Figur 3eine schematische Ansicht auf die Anordnung eines Kraftfahrzeug-Steuergeräts 12 und eines Beeinflussungsgeräts 11 in einem Labor nach dem Stand der Technik,
Figur 4eine schematische Ansicht auf die Anordnung eines Kraftfahrzeug-Steuergeräts 12 und eines Beeinflussungsgeräts 11 in einem Kraftfahrzeug nach dem Stand der Technik,
Figur 5 eine schematische Ansicht auf den strukturellen Aufbau eines Kraftfahrzeug-Steuergeräts 12 und eines Beeinflussungsgeräts 11 nach dem Stand der Technik.

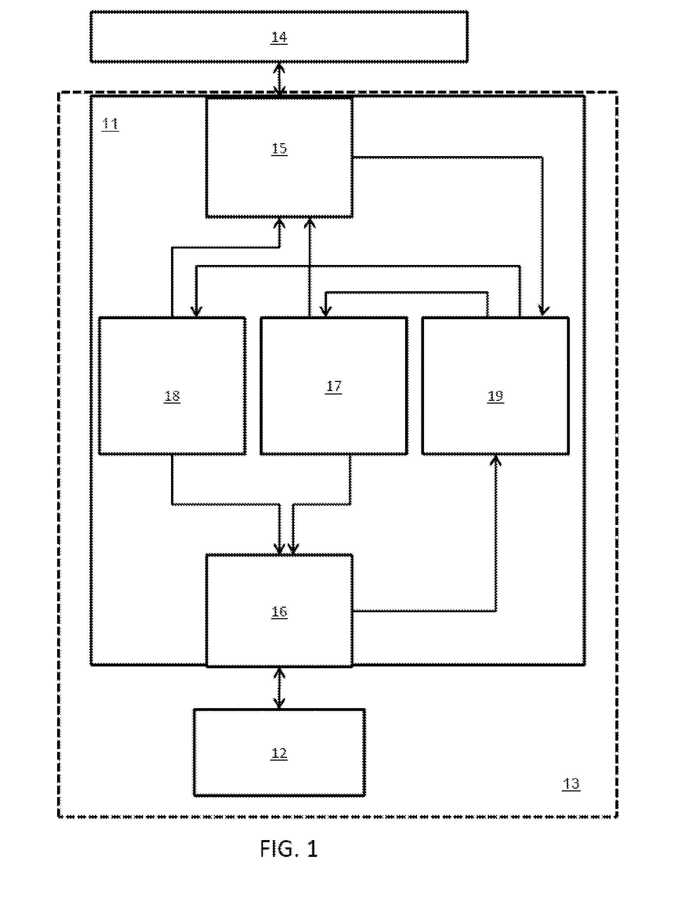

Figur 1 zeigt eine erfindungsgemäße Ausführungsform eines Verfahrens zur Verarbeitung von Daten in einem Beeinflussungsgerät.

Ein Kraftfahrzeug-Steuergerät 12 ist mit einem Beeinflussungsgerät 11 über eine Kraftfahrzeug-Steuergeräte-Schnittstelle 16 verbunden, wobei das Kraftfahrzeug-Steuergerät 12 und das Beeinflussungsgerät 11 zusammen in einem Gehäuse 13 oder in zwei verschiedenen Gehäusen angeordnet sind.

Beispielsweise werden die Daten über eine Trace-Schnittstelle des Kraftfahrzeug-Steuergeräts 12 an das Beeinflussungsgerät 11 übertragen oder das Beeinflussungsgerät 11 liest die Daten, beispielsweise über eine Debug-Schnittstelle, aus einem Speicher des Kraftfahrzeug-Steuergeräts 12 aus.

Weiterhin kann das Beeinflussungsgerät 11 dem Kraftfahrzeug-Steuergerät 12 Daten übermitteln, beispielsweise über eine dafür vorgesehene Schnittstelle oder indem das Beeinflussungsgerät 11 die zu übermittelnden Daten über eine Schnittstelle, insbesondere über eine Debug-Schnittstelle des Kraftfahrzeug-Steuergeräts 12, in den Speicher des Kraftfahrzeug-Steuergeräts 12 schreibt.

Das Beeinflussungsgerät 11 ist weiterhin mit einem Datenverarbeitungsgerät 14 über eine Datenverarbeitungsgeräte-Schnittstelle 15 verbunden. Ein Datenverarbeitungsgerät 14 ist beispielsweise ein Personal Computer, ein Simulator oder ein Prozessorboard. Eine Datenübertragung zwischen dem Beeinflussungsgerät 11 und dem Datenverarbeitungsgerät 14 erfolgt gemäß dem XCP-Protokoll oder dem CCP-Protokoll.

Das XCP Protokoll (XCP) ist ein Netzwerkprotokoll. Es wurde vom ASAM e.V. standardisiert und findet hauptsächlich Anwendung bei der Entwicklung und beim Test von Steuergeräten für Kraftfahrzeuge. Das XCP-Protokoll basiert auf den Erfahrungen bezüglich des CCP-Protokolls. Da das CCP-Protokoll dem XCP-Protokoll sehr stark ähnelt, umfasst die Erfindung gleichermaßen das CCP-Protokoll wie auch das XCP-Protokoll.

Das XCP Protokoll generalisiert den Zugriff auf Steuergeräte so, dass verschiedene Transportschichten benutzbar sind - zum Beispiel CAN, Ethernet, Flexray und USB. Es basiert auf Nachrichten-Paketen, über die ein XCP-Master mit einem XCP-Slave kommunizieren kann. Ein XCP-Master ist beispielsweise das Datenverarbeitungsgerät 14. Ein XCP-Slave ist beispielsweise das Beeinflussungsgerät 11.

Das XCP-Protokoll unterscheidet drei verschiedene Arten von Befehlen: DAQ; STIM und CMD.

Unter einer DAQ ist eine Messung zu verstehen, die nach der Definition von XCP quasi aus der Abarbeitung von Adress-Listen besteht. Es werden Daten anhand vorgegebener Adress-Listen aus dem Kraftfahrzeug-Steuergerät 12 gelesen und als DAQ-Nachricht an den Master, zum Beispiel das Datenverarbeitungsgerät 14 gesendet. Das Erfassen bzw. Senden dieser DAQ-Nachrichten erfolgt aufgrund von Ereignissen bzw. Triggern.

STIM hat eine ähnliche Funktion, wie DAQ, nur die Richtung der Daten ist vertauscht. Ein XCP-Master, beispielsweise das Datenverarbeitungsgerät 14, sendet STIM-Daten an den XCP-Slave, beispielsweise das Beeinflussungsgerät 11. Der XCP-Slave schreibt diese Daten anhand der vorliegenden Konfiguration in das Kraftfahrzeug-Steuergerät 12. Das Schreiben in das Kraftfahrzeug-Steuergerät 12 wird dabei wiederum durch Ereignisse ausgelöst.

Weiterhin stellt das XCP-Protokoll Kommandobefehle, sogenannte CMD-Befehle bereit, über die ein Master mit einem Slave eine Verbindung aufbaut und über die der Master den Slave beispielsweise konfiguriert oder Informationen austauscht. Die Konfiguration ist dabei beispielsweise die Konfiguration von DAQ und STIM. Bei laufender DAQ/STIM können weitere CMD Nachrichten ausgetauscht werden. So können über CMD Nachrichten durch den XCP- Master Kalibrierungsvorgänge, also Änderungen an nicht variablen Parametern eines Kraftfahrzeug-Steuergeräte-Programms, zur Laufzeit einer DAQ bzw. STIM parallel durchgeführt werden.

Zudem kann ein Master regelmäßig Informationen vom Slave, wie Statusinformationen oder die Zeit des Slaves abfragen um sich beispielsweise selbst auf diese Zeit zu synchronisieren oder sicherzustellen, dass der Slave noch verfügbar ist.

Nach erfolgter Konfiguration kann ein Slave wie das Beeinflussungsgerät 11 beispielsweise ohne weitere Anforderung von dem Master wie dem Datenverarbeitungsgerät 14 eine DAQ, also Messung von Daten, abarbeiten und dem Datenverarbeitungsgerät 14 beispielsweise Messdaten aus dem Kraftfahrzeug-Steuergerät 12 bereitstellen. Diese Messdaten können beispielsweise Speicherbereichs-Daten des Kraftfahrzeug-Steuergeräts 12 sein, die vom Beeinflussungsgerät autark in einem bestimmten Zeitraster oder aufgrund von festgelegten Ereignissen aus dem Kraftfahrzeug-Steuergerät 12 erfasst und an das Datenverarbeitungsgerät 14, den Master, gesendet werden.

Der Master kann unabhängig beispielsweise zeitgleich dazu selbst STIM-Daten oder weitere Konfigurations/Status-Nachrichten, also CMD-Nachrichten, an das Beeinflussungsgerät 11 senden.

STIM-Daten vom Datenverarbeitungsgerät 14 werden vom Bearbeitungsgerät 11 empfangen und anhand der vorher festgelegten Konfiguration aufgrund von spezifischen Ereignissen, wie z.B. innerhalb eines spezifischen Zeitrasters, einer Erkennung eines Kraftfahrzeug-Steuergeräte-Ereignisses wie zum Beispiel eine Variable wurde geschrieben oder unmittelbar nach Erhalt der Daten, in ein Kraftfahrzeug-Steuergerät 11 geschrieben.

Die Konfiguration, welche Gegebenheiten ein bestimmtes Ereignis auslösen, die wiederum ein konfigurationsgemäßes DAQ und / oder ein STIM durchführen, ist implementierungsspezifisch. Das Beeinflussungsgerät 11 bietet hierfür beispielsweise Konfigurationsmöglichkeiten an. Die Zuordnung der DAQ-Daten und STIM-Daten zu den jeweils spezifischen Ereignissen ist hingegen Bestandteil des XCP Protokolls.

Konfigurations- bzw. Status-Nachrichten, beispielsweise ein Alive-Check oder Zeitsynchronisierungsnachrichten werden hingegen vom Beeinflussungsgerät 11 in der Regel nur intern verwendet.

DAQ- und STIM-Datenübertragungen sind in der Regel zeitkritisch und sollen eine geringe Latenz und hohe Bandbreite aufweisen, damit beispielsweise BypassAnwendungen performant durchgeführt werden können.

Konfigurationsaufgaben oder Status-Informationen wie die CMD-Daten sind hingegen in der Regel nicht zeitkritisch und können sogar zugunsten von DAQ und STIM-Abarbeitungen verzögert werden.

Das Beeinflussungsgerät 11 weist erfindungsgemäß eine zweite Ausführungseinheit auf, wobei die zweite Ausführungseinheit vorgegebene Datenverarbeitungsschritte schneller ausführt als die erste Ausführungseinheit 17. Zum Beispiel sind die zeitkritischen Teile der XCP-Protokollabarbeitung in schneller, auf die Anwendung optimierter parallelisierter Hardware realisiert, wohingegen nicht zeitkritische Teile des XCP-Protokolls, zum Beispiel XCP-Konfigurations-Befehle in sequentiell abgearbeiteter Software auf der ersten Ausführungseinheit 17 verarbeitet werden.

Das Beeinflussungsgerät 11 erhält entweder Daten von dem Kraftfahrzeug-Steuergerät 12 oder von dem Datenverarbeitungsgerät 14. Im Beeinflussungsgerät 11 wird erfindungsgemäß entschieden, welche Daten durch die erste Ausführungseinheit 17 verarbeitet werden und welche Daten durch die zweite Ausführungseinheit 18 verarbeitet werden.

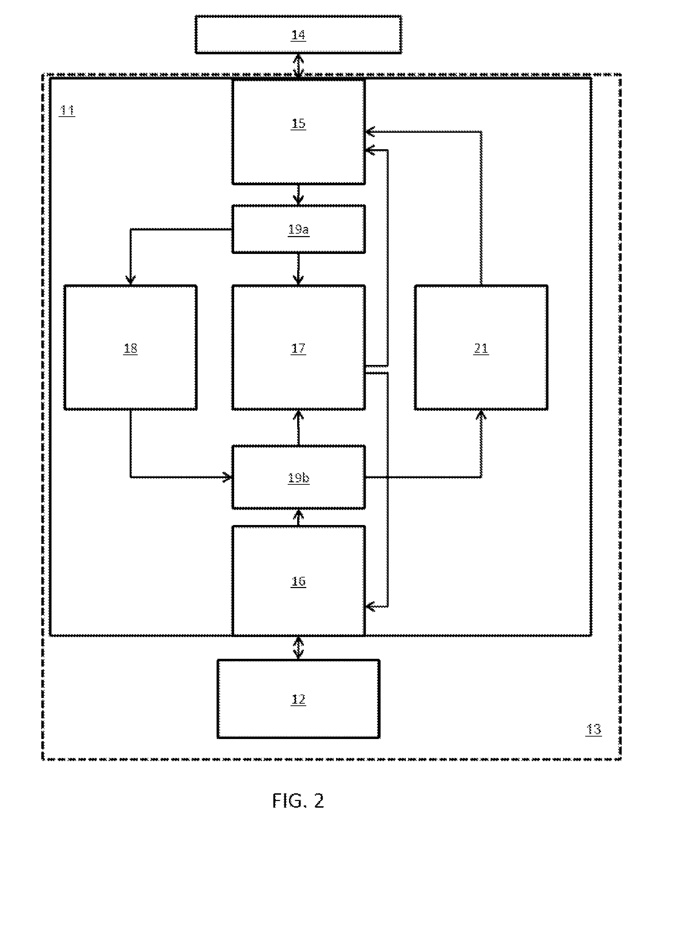

In einer bevorzugten Ausführungsform gibt es eine der ersten Ausführungseinheit 17 und der zweiten Ausführungseinheit 18 vorgelagerte Komponente 19. Die vorgelagerte Komponente ist entweder eine Komponente 19 für beide Ausführungseinheiten wie in Figur 1 dargestellt oder jeweils eine vorgelagerte Komponente 19a für die Daten, die über die Datenverarbeitungsgeräte-Schnittstelle in das Beeinflussungsgerät übertragen werden und eine vorgelagerte Komponente 19b für die Daten, die über die Steuergeräte-Schnittstelle übertragen werden, wie in Figur 2 dargestellt. Die vorgelagerte Komponente 19a für die Daten, die über die Datenverarbeitungsgeräte-Schnittstelle in das Beeinflussungsgerät übertragen werden, ist als separate Komponente oder als zur Datenverarbeitungsgeräte-Schnittstelle zugehörig ausgebildet. Ebenso ist die vorgelagerte Komponente 19b für die Daten, die über die Steuergeräte-Schnittstelle in das Beeinflussungsgerät übertragen werden, als separate Komponente oder als zur Datenverarbeitungsgeräte-Schnittstelle zugehörig ausgebildet. In der vorgelagerten Komponente 19 wird erfindungsgemäß entschieden, ob die Daten im Beeinflussungsgerät 11 in der ersten Ausführungseinheit 17 oder in der zweiten Ausführungseinheit 18 bearbeitet werden.

In einer weiteren nicht dargestellten Ausführungsform wird in der ersten Ausführungseinheit 17 entschieden, ob die Daten im Beeinflussungsgerät 11 in der ersten Ausführungseinheit 17 oder in der zweiten Ausführungseinheit 18 bearbeitet werden.

In einer weiteren nicht dargestellten Ausführungsform wird in der zweiten Ausführungseinheit 18 entschieden, ob die Daten im Beeinflussungsgerät 11 in der ersten Ausführungseinheit 17 oder in der zweiten Ausführungseinheit 18 bearbeitet werden.

In einer weiteren nicht dargestellten Ausführungsform wird bezüglich der Daten, die von dem Kraftfahrzeug-Steuergerät 12 an das Beeinflussungsgerät 11 übertragen werden in der Kraftfahrzeug-Steuergeräte-Schnittstelle 16 entschieden, ob die Daten in der ersten Ausführungseinheit 17 oder in der zweiten Ausführungseinheit 18 bearbeitet werden.

Eine weitere Ausführungsform ist in Figur 2 dargestellt. In dieser Ausführungsform weist das Beeinflussungsgerät 11 zusätzlich zu der ersten Ausführungseinheit 17 und der zweiten Ausführungseinheit 18 eine dritte Ausführungseinheit 21 auf. Beispielsweise führt die dritte Ausführungseinheit 21 so wie die zweite Ausführungseinheit 18 vorgegebene Datenverarbeitungsschritte schneller aus als die erste Ausführungseinheit 17, wobei die vorgegebenen Datenverarbeitungsschritte die gleichen sind, die auch die zweite Ausführungseinheit 18 schneller als die erste Ausführungseinheit 17 durchführt oder andere vorgegebene Datenverarbeitungsschritte sind. Die Daten werden in der ersten Ausführungseinheit 17, der zweiten Ausführungseinheit 18 oder der dritten Ausführungseinheit 21 verarbeitet. Die Aufteilung der Daten auf die erste Ausführungseinheit 17, die zweite Ausführungseinheit 18 oder die dritte Ausführungseinheit 21 erfolgt entweder über die gemeinsame vorgelagerte Komponente 19 oder über eine der separaten vorgelagerten Komponenten19a bzw. 19b.

In einer bevorzugten Ausführungsform sind mindestens drei Arten von Daten vorgesehen, wobei die drei Arten von Daten beispielsweise DAQ-, STIM- und CMD-Daten sind.

Die Datenverarbeitung erfolgt je nach Art der Daten auf der ersten Ausführungseinheit 17, der zweiten Ausführungseinheit 18 oder der dritten Ausführungseinheit 21. Zum Beispiel werden CMD-Daten auf der ersten Ausführungseinheit 17 verarbeitet. Diese Daten müssen nicht in Echtzeit verarbeitet werden und brauchen deshalb kein besonders schnellen Verarbeitungsschritte. Die zweite Art und dritte Art von Daten, wie zum Beispiel DAQ- und STIM-Daten müssen dagegen innerhalb eines vorgegebenen Zeitintervalls verarbeitet werden. Beispielsweise um die Daten der zweiten Art und die Daten der dritten Art parallel bearbeiten zu können, werden die STIM-Daten auf der zweiten Ausführungseinheit 18 und die DAQ-Daten auf der dritten Ausführungseinheit 21 bearbeitet.

In einer weiteren nicht dargestellten erfindungsgemäßen Ausführungsform wird mittels der ersten Ausführungseinheit 17 die zweite Ausführungseinheit und / oder die dritte Ausführungseinheit programmiert und / oder konfiguriert. Die erste Ausführungseinheit nimmt zur Laufzeit die gewünschte Konfiguration entgegen und programmiert und / oder konfiguriert die zweite Ausführungseinheit und / oder die dritte Ausführungseinheit ebenfalls zur Laufzeit. Dies hat beispielsweise den Vorteil, dass die Flexibilität eines Prozessors mit dem hohen Datendurchsatz eines FPGAs vereint wird.

## Patentansprüche

1. Verfahren zur Verarbeitung von Daten aufweisend
- ein Kraftfahrzeug-Steuergerät (12)
- ein mit dem Kraftfahrzeug-Steuergerät (12) verbundenes Beeinflussungsgerät (11),
- ein mit dem Beeinflussungsgerät (11) verbundenes Datenverarbeitungsgerät (14)
wobei das Beeinflussungsgerät (11) eine erste Ausführungseinheit(17) enthält, das Kraftfahrzeug-Steuergerät (12) und das Beeinflussungsgerät (11) in einem Kraftfahrzeug angeordnet sind oder das Kraftfahrzeug-Steuergerät (12) und das Beeinflussungsgerät (11) in einem Prüfstand oder Laborplatz angeordnet sind,
auf dem Kraftfahrzeug-Steuergerät (12) ein erstes Programm läuft und
zwischen dem Datenverarbeitungsgerät (14) und dem Beeinflussungsgerät (11) Daten gemäß einem XCP-Protokoll oder einem CCP-Protokoll ausgetauscht werden,
**dadurch gekennzeichnet, dass**
im Beeinflussungsgerät (11) eine zweite Ausführungseinheit (18) vorgesehen ist, wobei die zweite Ausführungseinheit (18) vorgegebene Datenverarbeitungsschritte schneller ausführt als die erste Ausführungseinheit (17) und
die mittels des XCP-Protokolls oder des CCP-Protokolls ausgetauschten Daten auf ein vorgegebenes Kriterium untersucht werden, und
anhand des Ergebnisses der Untersuchung die Datenverarbeitung entweder in der ersten Ausführungseinheit (17) oder in der zweiten Ausführungseinheit (18) durchgeführt wird.

2. Verfahren nach Anspruch 1, **dadurch gekennzeichnet, dass** die Daten eine erste Priorität oder eine zweite Priorität aufweisen und
dass als Kriterium die Priorität der Daten überprüft wird und
die Daten mit einer ersten Priorität auf der zweiten Ausführungseinheit (18) und die Daten mit einer zweiten Priorität auf der ersten Ausführungseinheit (17) bearbeitet werden.

3. Verfahren nach Anspruch 1 oder 2, **dadurch gekennzeichnet dass** die von dem Kraftfahrzeug-Steuergerät (12) auf das Beeinflussungsgerät (11) übertragenen Daten auf das vorgegebene Kriterium untersucht werden, und
anhand des Ergebnisses der Untersuchung die Datenverarbeitung entweder in der ersten Ausführungseinheit (17) oder in der zweiten Ausführungseinheit (18) durchgeführt wird.

4. Verfahren nach einem der vorangehenden Ansprüche, **dadurch gekennzeichnet, dass** das Beeinflussungsgerät (11) eine der ersten Ausführungseinheit (17) und der zweiten Ausführungseinheit (18) vorgelagerte Komponente (19) aufweist und mittels der vorgelagerten Komponente (19) eine Aufteilung der Daten auf die erste Ausführungseinheit (17) und auf die zweite Ausführungseinheit (18) durchgeführt wird.

5. Verfahren nach einem der Ansprüche 1 bis 3, **dadurch gekennzeichnet**, mittels der ersten Ausführungseinheit (17) oder der zweiten Ausführungseinheit (18) oder der Datenverarbeitungsgeräte-Schnittstelle (15) oder der Kraftfahrzeug-Steuergeräte-Schnittstelle (16) eine Aufteilung der Daten auf die erste Ausführungseinheit (17) und auf die zweite Ausführungseinheit (18) durchgeführt wird.

6. Verfahren nach einem der vorangehenden Ansprüche, **dadurch gekennzeichnet, dass** die Datenverarbeitung in der zweiten Ausführungseinheit (18) mittels einer FPGA-Einheit durchgeführt wird.

7. Verfahren nach einem der vorangehenden Ansprüche, **dadurch gekennzeichnet, dass** die erste Ausführungseinheit (17) eine ein sequenzielles Programm ausführende Prozessoreinheit ist.

8. Verfahren nach einem der vorangehenden Ansprüche, **dadurch gekennzeichnet, dass** das Beeinflussungsgerät (11) eine dritte Ausführungseinheit (21) umfasst, mindestens drei Arten von Daten vorgesehen sind und
eine erste Art von Daten in der ersten Ausführungseinheit (17), eine zweite Art von Daten in der zweiten Ausführungseinheit (18) und eine dritte Art von Daten in der dritten Ausführungseinheit (21) verarbeitet wird.

9. Verfahren nach einem der vorangehenden Ansprüche, **dadurch gekennzeichnet, dass** mittels der ersten Ausführungseinheit (17) die zweite Ausführungseinheit (18) und / oder die dritte Ausführungseinheit (21) umprogrammiert oder konfiguriert wird.
